(19) **Europäisches Patentamt European Patent Office Office européen des brevets**

(11) **EP 1 939 606 B1**

(12) **FASCICULE DE BREVET EUROPEEN**

(45) Date de publication et mention de la délivrance du brevet:
**15.09.2010 Bulletin 2010/37**

(51) Int Cl.:
***G01N 15/08*** *(2006.01)* ***G01M 3/32*** *(2006.01)*
***F17C 13/02*** *(2006.01)*

(21) Numéro de dépôt: **07123137.7**

(22) Date de dépôt: **13.12.2007**

(54) **Procédé de mesure de la porosité réelle de la barrière d'étanchéité d'une cuve de confinement de fluide**

Messverfahren der realen Porosität der Dichtungsbarriere eines Begrenzungsbehälters für Flüssigkeiten

Method for measuring the actual porosity of the watertightness barrier of a fluid containment tank

(84) Etats contractants désignés:
**AT BE BG CH CY CZ DE DK EE ES FI FR GB GR HU IE IS IT LI LT LU LV MC MT NL PL PT RO SE SI SK TR**
Etats d'extension désignés:
**AL BA HR MK RS**

(30) Priorité: **27.12.2006 FR 0611432**

(43) Date de publication de la demande:
**02.07.2008 Bulletin 2008/27**

(73) Titulaire: **STX FRANCE S.A.**
**44613 Saint Nazaire Cedex (FR)**

(72) Inventeurs:
• **DUFLOS, Christian**
**44600, SAINT NAZAIRE (FR)**
• **ESBELIN, Paule**
**44600, SAINT NAZAIRE (FR)**

(74) Mandataire: **Bomer, Françoise Marie et al**
**Cabinet Regimbeau**
**Espace Performance**
**Bâtiment K**
**35769 Saint-Grégoire-Cedex (FR)**

(56) Documents cités:
**FR-A1- 2 317 649     FR-A1- 2 509 839**

**Description**

La présente invention concerne le domaine technique des cuves calorifugées de confinement d'un fluide, tel qu'un gaz liquéfié, dites "cuves à membranes". Ce type de cuve est installé à l'intérieur de la coque d'un navire de transport, tel qu'un méthanier.

L'invention se rapporte plus précisément à un procédé de mesure de la porosité réelle de l'une des couches d'étanchéité de cette cuve.

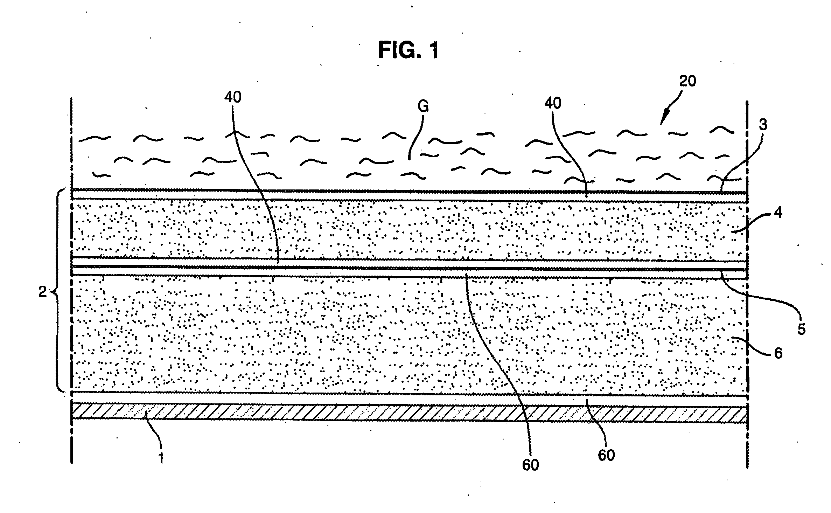

La structure de la paroi de cette cuve va maintenant être décrite brièvement, en faisant référence à la figure 1 jointe. Cette dernière est une vue schématique, en coupe transversale, de la paroi de la cuve contenant le gaz liquéfié.

Le gaz liquéfié G, par exemple du méthane, est stocké à l'intérieur d'une cuve 20 dont la paroi 2 est rendue solidaire de la coque 1 du navire par tout moyen de fixation approprié.

La coque du navire peut être à simple ou plus généralement à double coque. Sur la figure 1, la référence numérique 1 désigne la paroi intérieure de la coque. Elle sert de structure porteuse à la cuve et sera dénommée comme telle dans la suite de la description et des revendications.

La paroi 2 comprend successivement, depuis la structure porteuse 1 jusqu'à l'intérieur de la cuve :

- une couche d'isolation thermique secondaire 6,
- une barrière d'étanchéité secondaire 5,
- une couche d'isolation thermique primaire 4,
- et une barrière d'étanchéité primaire 3.

Le matériau constituant les couches d'isolation thermique 4 et 6 peut être un matériau isolant alvéolaire, tel qu'une mousse de polyuréthane, présentant une structure poreuse et du contre-plaqué pour la rigidification de l'ensemble.

Ces couches d'isolation primaire 4 et secondaire 6 ont pour rôle d'isoler thermiquement le gaz liquéfié, par rapport à l'extérieur, et de le conserver à basse température, afin de limiter son taux d'évaporation. A titre d'exemple, le méthane est transporté à des températures voisines de 160°C.

La barrière d'étanchéité secondaire 5 est constituée par exemple d'un matériau se présentant sous la forme d'une nappe souple ou rigide, collée entre les couches d'isolation thermique 4 et 6. On citera à titre d'exemple, un matériau connu sous la marque déposée "TRIPLEX", qui comprend une fine feuille métallique continue, prise en sandwich entre deux tissus de fibres de verre.

La barrière d'étanchéité primaire 3 peut être formée par assemblage de virures métalliques.

La barrière d'étanchéité primaire 3 qui est au contact direct du gaz liquéfié G a pour rôle d'assurer le confinement de celui-ci, tandis que la barrière d'étanchéité secondaire 5 joue le même rôle, mais n'intervient qu'en cas de fuites au niveau de ladite barrière d'étanchéité primaire 3.

Enfin, la couche d'isolation thermique secondaire 6 peut être fixée à la structure porteuse 1, par exemple au moyen de gougeons et/ou de cordons adhésifs non représentés sur la figure.

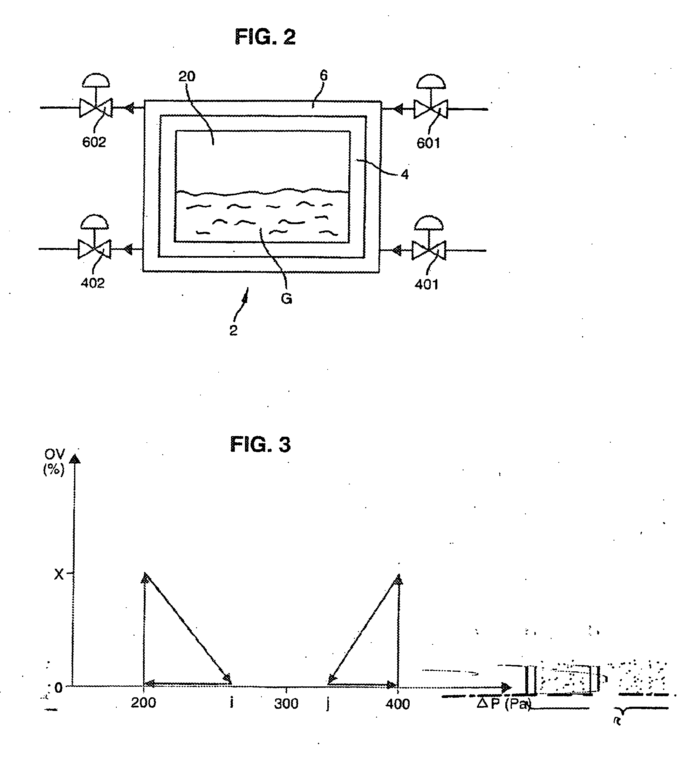

Par ailleurs, et comme représenté sur la figure 2 jointe, on introduit à l'intérieur d'espaces libres 40 et 60 des couches d'isolation primaire 4 et secondaire 6, un gaz inerte, par exemple de l'azote à l'état gazeux ou de l'air sec, ce gaz étant maintenu à une pression contrôlée.

Par « espace libre », on entend le volume non occupé par les matériaux isolants et par les moyens de fixation. Il s'agit notamment des espaces libres 40 et 60 existant entre des éléments voisins de matériaux isolants qui constituent lesdites couches d'isolation 4 et 6.

La figure 2 représente de façon schématique une cuve de stockage 20 de gaz liquéfié et les moyens de régulation de la pression du gaz inerte.

La pression du gaz inerte à l'intérieur de l'espace libre 60 de la couche d'isolation thermique secondaire 6 est régulée par une vanne d'admission 601 de ce gaz et une vanne de refoulement 602, ces deux vannes sont dites "secondaires", par référence à la couche 6.

De façon similaire, la pression du gaz inerte à l'intérieur de l'espace libre 40 de la couche d'isolation thermique primaire 4 est régulée par une vanne d'admission 401 de ce gaz et une vanne de refoulement 402, dites "primaires"'.

Ces vannes sont en outre commandées par un système de régulation non représenté sur les figures.

Lorsque la barrière d'étanchéité secondaire 5 est rigoureusement étanche, les deux espaces (enceintes) primaire et secondaire ne sont pas en communication de fluide.

L'intégrité de cette barrière d'étanchéité secondaire 5 est primordiale et réglementée, afin d'assurer la sécurité du navire dans le cas d'une avarie sur la barrière d'étanchéité primaire 3.

Le gaz inerte présent dans les couches d'isolation 4 et 6 permet de maintenir l'espace libre des couches d'isolation à une certaine pression choisie et de contrôler qu'il n'y a pas de fuites du gaz liquéfié G entre celles-ci.

A cet effet, des prélèvements de gaz inerte sont effectués ponctuellement ou en continu et le gaz prélevé est analysé pour vérifier qu'il ne contient pas de quantités du gaz G, transporté dans la cuve 20. En d'autres termes, on vérifie par exemple que l'azote ne contient pas de méthane.

Une technique connue pour vérifier l'intégrité de la barrière d'étanchéité secondaire 5 consiste à effectuer une mesure dite "de la surface normalisée de porosité", connue de l'homme du métier sous l'acronyme "NPA", d'après l'expression anglaise *"Normalized Porosity Area"*.

La "surface normalisée de porosité" (NPA) se définit comme étant *"l'équivalent de la surface d'un trou conduisant à la même perte de gaz liquéfié G que toutes les pertes d'une barrière d'étanchéité d'une surface de 5000 m² dont la qualité (porosité) est considérée comme acceptable pour empêcher ledit gaz liquéfié d'atteindre la structure porteuse de la coque, tout en autorisant ce gaz (sous forme gazeuse) à passer à travers ladite couche d'étanchéité"*.

Elle s'exprime en m².

En pratique, cette mesure est réalisée lorsque la cuve 20 est vide et se trouve à température ambiante et à la pression atmosphérique.

On met l'espace libre de la couche d'isolation thermique secondaire 6 sous vide, c'est-à-dire sous une dépression d'environ -500 mbars (- 5.10⁴ Pa) par rapport à la pression atmosphérique normale qui est de l'ordre de 1020 mbars (environ 10⁵ Pa). On mesure ensuite la durée mise par l'espace libre de la couche d'isolation thermique secondaire 6 pour remonter d'une pression de -450 mbars par rapport à la pression atmosphérique normale à une pression de -300 mbars par rapport à la pression atmosphérique normale.

On calcule ensuite la valeur de la surface normalisée de porosité (NPA), en appliquant les formules suivantes :

Lorsque le gaz inerte est de l'azote à 21 °C :

$$N.P.A = \frac{1{,}188 \times 10^{-3} \times V_{IS}}{A_{SB} \times \Delta T}$$

Lorsque le gaz inerte est de l'air à 21 °C:

$$N.P.A = \frac{1{,}210 \times 10^{-3} \times V_{IS}}{A_{SB} \times \Delta T}$$

avec :

$A_{SB}$ : aire de la barrière d'étanchéité secondaire 5 de la cuve considérée (exprimée en m2),
$V_{IS}$ : volume libre (espace libre) à l'intérieur de la couche d'isolation thermique secondaire 6 (exprimé en m³),
$\Delta T$ : durée pour que la pression remonte de -450 mbars par rapport à la pression atmosphérique normale à -300 mbars par rapport à la pression atmosphérique normale (exprimée en heures).

Ensuite, cette valeur est comparée à des valeurs de référence qui varient en fonction du nombre de cycles de mise en froid de la cuve dans le temps. On détermine ainsi si la cuve continue de respecter les normes de sécurité exigées.

Cette technique de contrôle de l'intégrité de la barrière d'étanchéité 5 ne peut toutefois être mise en oeuvre que lorsque la cuve 20 est vide, c'est-à-dire en dehors des périodes d'exploitation du navire, et lorsque la cuve est à température ambiante, lorsque le navire est en arrêt technique.

Or, les périodes d'immobilisation d'un navire sont coûteuses et peu fréquentes et doivent de plus être réduites au maximum.

Le document FR 2 509 839 décrit un appareil et un procédé de détection de fuites dans un réservoir cryogénique de gaz. Ce procédé est basé sur la mesure de la variation du débit d'azote entre l'entrée et la sortie de l'espace secondaire de calorifugeage et sur la même mesure pour l'espace primaire. Ceci suppose un écoulement de l'azote à l'intérieur de ces espaces. Ce document ne décrit pas le fait d'effectuer des mesures de pression et de température absolue à l'intérieur de l'espace libre de la couche d'isolation secondaire, et de plus, de le faire pendant une période où les vannes d'admission et de refoulement du gaz inerte sont fermées, de sorte qu'il n'existe pas d'écoulement dans l'enceinte secondaire au moment de la mesure.

L'invention a donc pour but de fournir un procédé de mesure de la porosité réelle de la barrière d'étanchéité secondaire d'une cuve, qui puisse être mis en oeuvre pendant le fonctionnement du navire, c'est-à-dire sans qu'il soit nécessaire de mettre celui-ci en arrêt technique et sans qu'il soit nécessaire de vidanger la cuve de stockage du gaz liquéfié et de la mettre à température ambiante. Le but est donc de pouvoir obtenir un contrôle en temps réel de l'étanchéité de la barrière d'étanchéité secondaire.

A, cet effet, l'invention concerne un procédé de mesure de la porosité réelle de l'une des barrières d'étanchéité aux liquides et aux gaz, dite "secondaire", de la paroi d'une cuve calorifugée de confinement d'un fluide, tel qu'un gaz liquéfié, dite "cuve à membranes", intégrée dans la structure porteuse d'un navire, ladite cuve comprenant également une barrière d'étanchéité aux liquides et aux gaz, dite "primaire" en contact avec le fluide contenu dans la cuve et deux couches d'isolation thermique, dites "primaire" et "secondaire", disposées de part et d'autre de ladite barrière d'étanchéité secondaire, la couche d'isolation secondaire étant apte à être fixée à ladite structure porteuse, un gaz inerte étant présent à l'intérieur de l'espace libre de chacune des deux couches d'isolation thermique primaire et secondaire, la pression à l'intérieur de l'espace libre de chacune des deux couches primaire et secondaire étant régulée respectivement par des vannes dites "primaire" d'admission et de refoulement et par des vannes dites "secondaires" d'admission et de refoulement dudit gaz inerte, l'ouverture et la fermeture desdites vannes étant commandées de façon à maintenir la pression à l'intérieur de l'espace libre de la couche d'isolation primaire dans une plage de valeurs de référence et la pression à l'intérieur de l'espace libre de la couche d'isolation secondaire à une valeur différente de celle régnant à l'intérieur de l'espace libre de ladite couche d'isolation primaire d'un écart de pression $\Delta\mathbf{P}$. Conformément à l'invention, le procédé comprend les étapes suivantes consistant à :

a) pendant au moins une période où les vannes d'admission et de refoulement du gaz de la couche secondaire sont fermées et où les conditions d'utilisation de la cuve restent stables, mesurer à au moins deux instants différents : les valeurs de la pression $\mathbf{P}$ et de la température absolue $\mathbf{T}$ à l'intérieur de l'espace libre de la couche d'isolation secondaire, de façon à pouvoir calculer la pression moyenne $\mathbf{P_m}$ et la température moyenne $\mathbf{T_m}$ à l'intérieur de l'espace libre de celle-ci,

b) calculer la porosité réelle $\mathbf{PO}$ de ladite barrière d'étanchéité secondaire selon la formule suivante :

$$PO = -\frac{dP}{dt} \; x \; \frac{V}{P_m} \; x \; \sqrt{\frac{P_m \; x \; M}{2 \; x \; \Delta P \; x \; R \; x \; T_m}}$$

dans laquelle $\dfrac{dP}{dt}$ est la vitesse de variation de la pression $\mathbf{P}$ à l'intérieur de l'espace libre de la couche d'isolation secondaire, $\mathbf{V}$ est le volume de l'espace libre de la couche d'isolation secondaire, $\mathbf{M}$ est la masse molaire du gaz inerte et $\mathbf{R}$ est la constante des gaz parfaits.

Selon d'autres caractéristiques avantageuses et non limitatives de l'invention, prises seules ou en combinaison :

- pour prendre en compte la variation de la température $\dfrac{dT}{dt}$ dans l'espace libre de la couche d'isolation secondaire et la variation de pression $\left(\dfrac{dP}{dt}\right)_{PRE}$ due à des prélèvements ponctuels ou continus de contrôle dans ce même espace, on corrige le $\dfrac{dP}{dt}$ mesure qui devient alors : $\left(\dfrac{dP}{dt}\right)_C = \left(\dfrac{dT}{dt} \; x \; \dfrac{P_m}{T_m}\right) + \left(\dfrac{dP}{dt}\right)_{PRE}$ et on calcule la porosité réelle $\mathbf{PO}$ de ladite barrière d'étanchéité secondaire selon la formule suivante :

$$PO = -\left(\frac{dP}{dt}\right)_C \; x \; \frac{V}{P_m} \; x \; \sqrt{\frac{P_m \; x \; M}{2 \; x \; \Delta P \; x \; R \; x \; T_m}}$$

- pendant l'étape a) on commande l'ouverture et la fermeture desdites vannes d'admission et de refoulement, de façon à maintenir la pression à l'intérieur de l'espace libre de la couche d'isolation primaire à une valeur voisine de la pression atmosphérique normale et la pression à l'intérieur de l'espace libre de la couche d'isolation secondaire à une valeur supérieure à celle régnant à l'intérieur de l'espace libre de ladite couche d'isolation primaire d'un écart de pression ∆**P** positif.

- on commande l'ouverture et la fermeture desdites vannes primaires d'admission et de refoulement et secondaires d'admission et de refoulement du gaz inerte, de façon à ce que l'écart de pression ∆**P** soit compris entre 0,5 et 4 mbars (entre 50 et 400 Pa) environ ;
- on commande l'ouverture et la fermetures desdites vannes primaires d'admission et de refoulement et secondaires d'admission et de refoulement du gaz inerte, de façon à ce que l'écart de pression ∆**P** soit compris entre 2 et 4 mbars (entre 200 et 400 Pa) environ ;
- on ouvre la vanne secondaire d'admission de gaz lorsque l'écart de pression ∆**P** est inférieur à 200 Pa et on la referme lorsque l'écart de pression ∆**P** est voisin de 300 Pa et on ouvre la vanne secondaire d'échappement du gaz inerte lorsque l'écart de pression ∆**P** est supérieur à 400 Pa et on la referme lorsque l'écart de pression ∆**P** est voisin de 300 Pa ;
- le gaz inerte est de l'azote.

D'autres caractéristiques et avantages de l'invention apparaîtront de la description qui va maintenant en être faite, en référence aux dessins annexés, qui en représentent, à titre indicatif mais non limitatif, un mode de réalisation possible.
Sur ces dessins :

- la figure 1 est un schéma représentant en coupe transversale, la paroi d'une cuve de stockage ;
- la figure 2 est un schéma représentant une cuve de stockage de gaz liquéfié et les moyens de régulation de la pression du gaz présent dans les parois de cette cuve, et
- la figure 3 est un graphique représentant le pourcentage d'ouverture des vannes d'admission et d'échappement du gaz inerte à l'intérieur de l'espace libre de la couche d'isolation secondaire, en fonction de l'écart de pression ∆**P** entre la pression régnant à l'intérieur de l'espace libre de la couche secondaire par rapport à celle régnant à l'intérieur de l'espace libre de la couche primaire.

Conformément à l'invention, on régule la pression à l'intérieur de l'espace libre 40 de la couche d'isolation primaire 4 et à l'intérieur de l'espace libre 60 de la couche d'isolation secondaire 6 selon les critères qui seront développés ci-après, de façon à avoir des plages de mesure stabilisées, pendant lesquelles il est possible d'effectuer diverses mesures cohérentes de la pression et de la température à l'intérieur de l'espace libre de ladite couche d'isolation secondaire 6.
Plus précisément, on commande l'ouverture et la fermeture des vannes d'admission 401, 601 et de refoulement 402, 602 du gaz inerte, de façon à maintenir la pression à l'intérieur de l'espace libre 40 de la couche d'isolation primaire 4 à une plage de valeur de référence et la pression à l'ïntérieur de l'espace libre 60 de la couche d'isolation secondaire 6 à une valeur différente de celle régnant à l'intérieur de l'espace libre de ladite couche d'isolation primaire 4 d'un écart de pression ∆**P**.
De préférence, on commande l'ouverture et la fermeture des vannes 401, 601, 402 et 602 de façon à maintenir la pression à l'intérieur de l'espace libre 40 de la couche d'isolation primaire 4 à une valeur voisine de la pression atmosphérique normale et la pression à l'intérieur de l'espace libre 60 de la couche d'isolation secondaire 6 à une valeur supérieure à celle régnant à l'intérieur de l'espace libre de ladite couche d'isolation primaire 4 d'un écart de pression ∆**P** positif.
Dans ce cas, l'espace libre de la couche secondaire 6 est en surpression par rapport à l'espace libre de la couche primaire 4 pendant la réalisation des mesures.
De préférence encore, on régule l'écart de pression ∆**P** entre les espaces libres des couches d'isolation secondaire 6 et primaire 4, pour qu'il soit compris entre 0,5 mbar (50 Pa) et 4 mbars (400 Pa) ou mieux encore entre 2 mbars (20 Pa) et 4 mbars (400 Pa).
La figure 3 représente ce schéma de régulation.
La partie gauche de la figure montre le pourcentage d'ouverture de la vanne secondaire d'admission 601 et la partie droite de la figure, le pourcentage d'ouverture de la vanne secondaire de refoulement 602, en fonction de l'écart de pression ∆**P** exprimé en Pa.
En pratique, on ouvre la vanne secondaire d'admission 601 d'un certain pourcentage **X,** lorsque l'écart de pression ∆**P** est inférieur à 200 Pa et on la referme lorsque l'écart de pression ∆**P** est voisin de 300 Pa, de préférence voisin d'une valeur **i** inférieure à 300 Pa, par exemple voisine de 260 Pa. Par ailleurs, on ouvre la vanne secondaire d'échappement 602 d'un certain pourcentage **X,** lorsque l'écart de pression ∆**P** est supérieur à 400 Pa et on la referme lorsque cet écart est voisin de 300 Pa, de préférence voisin d'une **valeur j** supérieure à 300 Pa, par exemple voisine de 340 Pa.
Cette façon de commander l'ouverture et la fermeture des vannes 601 et 602 permet d'obtenir des périodes de temps suffisamment longues pendant lesquelles lesdites vannes 601 et 602 sont fermées.

Pendant au moins une période de temps où ces vannes 601 et 602 sont fermées et/ou les conditions d'utilisation de la cuve 20 restent stables, on mesure à au moins deux instants différents :

- les valeurs de la pression **P** et de la température absolue **T** à l'intérieur de l'espace libre de la couche d'isolation secondaire 6, puis on calcule la moyenne de ces différentes pressions et la moyenne de ces différentes températures absolues, valeurs dénommées ci-après pression moyenne $P_m$ et température absolue moyenne $T_m$.

Par « conditions d'utilisation stables de la cuve », on désigne des périodes de fonctionnement de la cuve pendant lesquelles les paramètres de température et/ou de pression restent homogènes, par exemple : la mise en froid de la cuve sans gaz liquéfié à l'intérieur, la cuve avec du gaz liquéfié à l'intérieur, le froid stabilisé à l'intérieur de la cuve, le réchauffement de la cuve.

On peut alors calculer la porosité réelle de la cuve, c'est-à-dire la section d'une fuite de gaz inerte au travers de la paroi de la cuve.

Dans la suite de la description et des revendications, les unités utilisées sont celles du système international, la pression étant exprimée en Pascals, le temps en secondes, le volume en $m^3$, la température en kelvin et la porosité réelle en $m^2$.

On part de l'hypothèse que le gaz inerte est un gaz parfait, isotherme, à écoulement subsonique incompressible.

La vitesse du gaz qui s'écoule entre la couche d'isolation secondaire 6 et la couche d'isolation primaire 4 est définie par la loi de Bernoulli :

$$v = \sqrt{\frac{2 \, \Delta P}{\rho}}$$

avec Δ**P** = l'écart de pression définit précédemment et p = la masse volumique du gaz.

p est déterminé par la loi des gaz parfaits comme suit :

$$\rho = \frac{M \, x \, P}{R \, x \, T}$$

**M** est la masse molaire du gaz,
**P** est la pression à l'intérieur de l'espace libre de la couche d'isolation secondaire 6,
**R** est la constante des gaz parfaits,
**T** est la température absolue du gaz à l'intérieur de l'espace libre de la couche secondaire 6.

Ce qui donne

$$v = \sqrt{\frac{2 \, \Delta P \, x \, R \, x \, T}{P \, x \, M}} \qquad (a)$$

La vitesse de variation de volume à l'intérieur de l'espace libre de la couche d'isolation 6 est :

$$\frac{dV}{dt} = v \, x \, PO \quad (b)$$

dans laquelle v est la vitesse du fluide et **PO** est la section du trou équivalent à la porosité réelle de la barrière d'étanchéité secondaire 5.

La vitesse de variation de la pression à l'intérieur de l'espace libre de la couche d'isolation secondaire 6, en supposant que la température à cet endroit est constante, est tirée de la dérivée de PV = constante.

$$P \frac{dV}{dt} + V \frac{dP}{dt} = 0$$

$$\frac{dP}{dt} = - \frac{P}{V} \frac{dV}{dt} \quad (c)$$

A partir des trois équations (a) (b) (c) précitées, nous en déduisons la relation entre **PO** et la vitesse $\frac{dP}{dt}$ de variation de la pression P à l'intérieur de l'espace libre de la couche d'isolation secondaire 6, soit ;

$$PO = \frac{1}{v} \ x \ \frac{dV}{dt} = \sqrt{\frac{P \ x \ M}{2 \ \Delta P \ x \ R \ x \ T}} \ x \left( - \frac{V}{P} \ x \frac{dP}{dt} \right)$$

$$PO = - \frac{dP}{dt} \ x \ \frac{V}{P} \ x \sqrt{\frac{P \ x \ M}{2 \ x \ \Delta P \ x \ R \ x \ T}}$$

En pratique, les valeurs de la pression P et de la température sont des moyennes, de sorte que dans la formule ci-dessus, on remplace **P** et **T** respectivement par la pression moyenne $P_m$ et la température absolue moyenne $T_m$.
On obtient pour la porosité réelle :

$$PO = - \frac{dP}{dt} \ x \ \frac{V}{P_m} \ x \sqrt{\frac{P_m \ x \ M}{2 \ x \ \Delta P \ x \ R \ x \ T_m}}$$

Par ailleurs, lorsque l'on souhaite prendre en compte la variation de la température $\frac{dT}{dt}$ dans l'espace libre de la couche d'isolation secondaire (6), et la variation de la pression $\left( \frac{dP}{dt} \right)_{PRE}$ due aux prélèvements ponctuels ou continus de contrôle à l'intérieur de cette même couche, (par exemple contrôle de la présence de méthane dans le gaz inerte), on affine la valeur de $\frac{dP}{dt}$ mesuré, qui devient la valeur corrigée $\left( \frac{dP}{dt} \right)_{C}$ et qui répond à la formule suivante

$$\left( \frac{dP}{dt} \right)_C = \left( \frac{dT}{dt} \ x \ \frac{P_m}{T_m} \right) + \left( \frac{dP}{dt} \right)_{PRE}$$

On obtient alors :

$$PO = -\left(\frac{dP}{dt}\right)_C \; x \; \frac{V}{P_m} \; x \; \sqrt{\frac{P_m \; x \; M}{2 \; x \; \Delta P \; x \; R \; x \; T_m}}$$

Le procédé conforme à l'invention permet de réaliser des contrôles sans mettre le navire en arrêt technique. Ces contrôles sont réalisables à tout moment de "stabilité" des cuves chargées ou non. De ce fait, ils peuvent être effectués beaucoup plus fréquemment et en temps réel.

Les valeurs de porosité obtenues correspondent mieux à la réalité et au vécu du navire, notamment lorsque celui-ci a subi un certain nombre de cycles de mise en froid et de réchauffement de ces cuves.

Des exemples de mesure sont donnés ci-après.

Ces mesures ont été effectuées avec de l'azote, en considérant qu'il fonctionne comme un gaz parfait, isotherme, d'écoulement subsonique incompressible.

La valeur de la constante des gaz parfait **R** est de 8314 et celle de la masse molaire **M** est de 29.

Les résultats obtenus sont reportés dans le tableau ci-dessous :

| | dP/dt | | V | $P_m$ | $\Delta P$ | $T_m$ | PO | df |
|---|---|---|---|---|---|---|---|---|
| **Etat cuve** | mb/h | Pa/s | $m^3$ | Pa | Pa | °K | $mm^2$ | mm |
| en froid stabilisé avec un talon de liquide | -3,7 | 0,1028 | 138,0 | 100000,0 | 300,0 | 233,0 | 7,08 | 3,00 |

**Revendications**

**1.** Procédé de mesure de la porosité réelle de l'une des barrières d'étanchéité aux liquides et aux gaz (5), dite "secondaire", de la paroi (2) d'une cuve calorifugée de confinement d'un fluide, tel qu'un gaz liquéfié, dite "cuve à membranes", intégrée dans la structure porteuse (1) d'un navire, ladite cuve comprenant également une barrière d'étanchéité aux liquides et aux gaz (3), dite "primaire" en contact avec le fluide contenu dans la cuve et deux couches d'isolation thermique (4,6), dites "primaire" et "secondaire", disposées de part et d'autre de ladite barrière d'étanchéité secondaire (5), la couche d'isolation secondaire (6) étant apte à être fixée à ladite structure porteuse (1), un gaz inerte étant présent à l'intérieur de l'espace libre (40, 60) de chacune des deux couches d'isolation thermique primaire (4) et secondaire (6), la pression à l'intérieur de l'espace libre de chacune des deux couches primaire (4) et secondaire (6) étant régulée respectivement par des vannes dites "primaire" d'admission (401) et de refoulement (402) et par des vannes dites "secondaires" d'admission (601) et de refoulement (602) dudit gaz inerte, l'ouverture et la fermeture desdites vannes (401, 402, 601, 602) étant commandées de façon à maintenir la pression à l'intérieur de l'espace libre (40) de la couche d'isolation primaire (4) dans une plage de valeurs de référence et la pression à l'intérieur de l'espace libre (60) de la couche d'isolation secondaire (6) à une valeur différente de celle régnant à l'intérieur de l'espace libre (40) de ladite couche d'isolation primaire (4) d'un écart de pression $\Delta$**P,**
ce procédé étant **caractérisé en ce qu'**il comprend les étapes suivantes consistant à:

   a) pendant au moins une période où les vannes d'admission (601) et de refoulement (602) du gaz de la couche secondaire (6) sont fermées et où les conditions d'utilisation de la cuve restent stables, mesurer à au moins deux instants différents : les valeurs de la pression **P** et de la température absolue **T** à l'intérieur de l'espace libre (60) de la couche d'isolation secondaire (6), de façon à pouvoir calculer la pression moyenne $P_m$ et la température moyenne $T_m$ à l'intérieur de l'espace libre (60) de celle-ci,
   b) calculer la porosité réelle **PO** de ladite barrière d'étanchéité secondaire (5) selon la formule suivante :

$$PO = -\frac{dP}{dt} \; x \; \frac{V}{P_m} \; x \; \sqrt{\frac{P_m \; x \; M}{2 \; x \; \Delta P \; x \; R \; x \; T_m}}$$

dans laquelle $\dfrac{dP}{dt}$ est la vitesse de variation de la pression **P** à l'intérieur de l'espace libre (60) de la couche d'isolation secondaire (6), **V** est le volume de l'espace libre (60) de la couche d'isolation secondaire (6), **M** est la masse molaire du gaz inerte et **R** est la constante des gaz parfaits.

2. Procédé selon la revendication 1, **caractérisé en ce que** pour prendre en compte la variation de la température $\dfrac{dT}{dt}$ dans l'espace libre (60) de la couche d'isolation secondaire (6) et la variation de pression $\left(\dfrac{dP}{dt}\right)_{PRE}$ due à des prélèvements ponctuels ou continus de contrôle dans ce même espace, on corrige le $\dfrac{dP}{dt}$ mesuré qui devient alors : $\left(\dfrac{dP}{dt}\right)_{C} = \left(\dfrac{dT}{dt} x \dfrac{P_m}{T_m}\right) + \left(\dfrac{dP}{dt}\right)_{PRE}$ et on calcule la porosité réelle **PO** de ladite barrière d'étanchéité secondaire (5) selon la formule suivante :

$$PO = -\left(\frac{dP}{dt}\right)_C \ x \ \frac{V}{P_m} \ x \ \sqrt{\frac{P_m \ x \ M}{2 \ x \ \Delta P \ x \ R \ x \ T_m}} \ ,$$

3. Procédé selon la revendication 1 ou 2, **caractérisé en ce qu'** on commande l'ouverture et la fermeture desdites vannes d'admission (401, 601) et de refoulement (402, 602), de façon à maintenir la pression à l'intérieur de l'espace libre (40) de la couche d'isolation primaire (4) à une valeur voisine de la pression atmosphérique normale et la pression à l'intérieur de l'espace libre (60) de la couche d'isolation secondaire (6) al une valeur supérieure à celle régnant à l'intérieur de l'espace libre (40) de ladite couche d'isolation primaire (4) d'un écart de pression Δ**P** positif.

4. Procédé selon la revendication 1, 2 ou 3, **caractérisé en ce qu'**on commande l'ouverture et la fermeture desdites vannes primaires d'admission (401) et de refoulement (402) et secondaires d'admission (601) et de refoulement (602) du gaz inerte, de façon à ce que l'écart de pression Δ**P** soit compris entre 0,5 et 4 mbars (entre 50 et 400 Pa) environ.

5. Procédé selon la revendication 4, **caractérisé en ce que** l'on commande l'ouverture et la fermetures desdites vannes primaires d'admission (401) et de refoulement (402) et secondaires d'admission (601) et de refoulement (602) du gaz inerte, de façon à ce que l'écart de pression Δ**P** soit compris entre 2 et 4 mbars (entre 200 et 400 Pa) environ.

6. Procédé selon la revendication 5, **caractérisé en ce que** l'on ouvre la vanne secondaire (602) d'admission de gaz lorsque l'écart de pression Δ**P** est inférieur à 200 Pa et **en ce qu'**on la referme lorsque l'écart de pression Δ**P** est voisin de 300 Pa et **en ce que** l'on ouvre la vanne secondaire d'échappement du gaz inerte lorsque l'écart de pression Δ**P** est supérieur à 400 Pa et **en ce qu'**on la referme lorsque l'écart de pression Δ**P** est voisin de 300 Pa.

7. Procédé selon l'une des revendications précédentes, **caractérisé en ce que** le gaz inerte est de l'azote.

**Claims**

1. A method for measuring the actual porosity of one of the sealing barriers for liquids and gases (5), said to be "secondary", of the wall (2) of a heat-insulated tank for the containment of a fluid such as a liquefied gas and known as a "membrane tank", incorporated into the bearing structure (1) of a vessel, said tank also including a leak-proof barrier to liquids and gases (3) said to be "primary", in contact with the fluid contained in the tank, and two thermal insulation layers (4, 6), said to be "primary" and "secondary" layers, located on either side of said secondary sealing barrier (5), with the secondary insulating layer (6) being designed to be secured to said bearing structure (1), with an inert gas being present within the free space (40, 60) of each of the two primary (4) and secondary (6) thermal insulation layers, with the pressure within the free space of each of the two primary (4) and secondary (6) layers being regulated respectively by valves called "primary" feed (401) and exhaust (402) valves and by valves called "secondary" feed (601) and exhaust (602) valves for the said inert gas, the opening and the closure of the said valves (401, 402, 601, 602) being controled so as to maintain the pressure within the free space (40) of the primary insulation layer (4) within a range of reference values, and the pressure within the free space (60) of the secondary insulation layer (6) to a value other than that existing within the free space (40) of the said primary insulation layer (4) by a pressure difference ΔP, this method being **characterised in that** it comprises the following stages consisting in:

a) during at least one period in which the feed (601) and exhaust (602) valves of the gas of the secondary layer (6) are closed, and in which the conditions of use of the tank remain stable, measuring at two different instants at least: the values of the pressure **P** and of the absolute temperature **T** within the free space (60) of the secondary insulating layer (6), so as to be able to calculate the mean pressure $\mathbf{P_m}$ and the mean temperature $\mathbf{T_m}$ within the free space (60) of the latter,

b) calculating the actual porosity **PO** of the said secondary sealing barrier (5) using the following formula:

$$PO = -\frac{dP}{dt} \times \frac{V}{P_m} \times \sqrt{\frac{P_m \times M}{2 \times \Delta P \times R \times T_m}}$$

in which $\dfrac{dP}{dt}$ is the speed of variation of the pressure **P** within the free space (60) of the secondary insulation layer (6), **V** is the volume of the free space (60) of the secondary insulation layer (6), **M** is the molecular mass of the inert gas, and **R** is the perfect gas constant.

2. A method according to claim 1, **characterised in that** in order to take into account the temperature variation $\dfrac{dT}{dt}$ in the free space (60) of the secondary insulation layer (6) and the pressure variation $\left(\dfrac{dP}{dt}\right)_{PRE}$ due to the periodic or continuous monitoring samples taken in this same space, a correction is applied to the $\dfrac{dP}{dt}$ measurement, which then become: $\left(\dfrac{dP}{dt}\right)_C = \left(\dfrac{dT}{dt} \times \dfrac{P_m}{T_m}\right) + \left(\dfrac{dP}{dt}\right)_{PRE}$

and the actual porosity (**PO**) of the said secondary sealing barrier (5) is calculated using the following formula:

$$PO = -\left(\frac{dP}{dt}\right)_C \times \frac{V}{P_m} \times \sqrt{\frac{P_m \times M}{2 \times \Delta P \times R \times T_m}}$$

3. A method according to claim 1 or 2, **characterised in that** the opening and the closure of the said feed (401, 601) and exhaust (402, 602) valves are controlled so as to maintain the pressure within the free space (40) of the primary insulation layer (4) to a value close to normal atmospheric pressure, and the pressure within the free space (60) of the secondary insulation layer (6) to a value above that existing within the free space (40) of the said primary insulation layer (4) by a positive pressure difference ΔP.

4. A method according to claim 1, 2 or 3, **characterised in that** the opening and the closure of the said primary feed (401) and exhaust (402) valve and secondary feed (601) and exhaust (602) valves for the inert gas are controlled so that the pressure difference ΔP is between 0.5 and 4 mbar (between 50 and 400 Pa) approximately.

5. A method according to claim 4, **characterised in that** the opening and the closure of the said primary feed (401) and exhaust (402) valves and secondary feed (601) and exhaust (602) valves for the inert gas are controlled so that the pressure difference ∆**P** is between 2 and 4 mbar (between 200 and 400 Pa) approximately.

6. A method according to claim 5, **characterised in that** the secondary gas feed valve (602) is opened when the pressure difference ∆**P** is less than 200 Pa, and is closed when the pressure difference ∆**P** is close to 300 Pa, and **in that** the secondary exhaust valve for the inert gas is opened when the pressure difference ∆**P** is more than 400 Pa, and is closed when the pressure difference ∆**P** is close to 300 Pa.

7. A method according to one the preceding claims, **characterised in that** the inert gas is nitrogen.


### Patentansprüche

1. Verfahren zum Messen der realen Porösität der einen der sogenannten sekundären Dichtheitsbarrieren für Flüssigkeiten und für Gase (5) der Wand (2) eines wärmeisolierten Sicherheitsbehälters eines Fluids, wie zum Beispiel eines Flüssiggases, genannt "Membrantank", der in der Trägerstruktur (1) eines Schiffs integriert ist, wobei der Tank auch eine Dichtheitsbarriere für Flüssigkeiten und Gase (3) umfasst, genannt "primär" in Kontakt mit dem Fluid, das in dem Tank enthalten ist, und zwei thermischen Isolierschichten (4,6), genannt "primär" und "sekundär", die auf beiden Seiten der sekundären Dichtheitsbarriere (5) angeordnet sind, wobei die sekundäre Isolierschicht (6) geeignet ist, an der Trägerstruktur (1) befestigt zu werden, wobei ein inertes Gas im Innern des Freiraums (40, 60) jeder der beiden primären (4) und sekundären (6) thermischen Isolierschichten vorliegt, wobei der Druck im Innern des Freiraums von jeder der primären (4) und sekundären (6) Schicht jeweils von einem sogenannten "primären" Einlass- (401) und Auslassventil (402) und von einem sogenannten "sekundären" Einlass- (601) und Auslassventil (602) des inerten Gases reguliert wird, wobei das Öffnen und das Schließen der Ventile (401, 402, 601, 602) derart gesteuert wird, dass der Druck im Innern des Freiraums (40) der primären Isolierschicht (4) in einem Referenzwertebereich und der Druck im Innern des Freiraums (60) der sekundären Isolierschicht (6) bei einem Wert gehalten wird, der um einen Druckunterschied ∆**P** verschieden zu dem ist, der im Innern des Freiraums (40) der primären Isolierschicht (4) herrscht, wobei das Verfahren **dadurch gekennzeichnet ist, dass** es die folgenden Schritte umfasst:

   a) während wenigstens einer Periode, in der das Einlass (601) - und Auslassventil (602) des Gases der sekundären Schicht (6) geschlossen sind und in der die Verwendungszustände des Tanks stabil bleiben, Messen zu wenigstens zwei verschiedenen Zeitpunkten: die Werte des Drucks **P** und der absoluten Temperatur **T** im Innern des Freiraums (60) der sekundären Isolierschicht (6), um den mittleren Druck **P_m** und die mittlere Temperatur **T_m** im Innern ihres Freiraums (60) berechnen zu können,
   b) Berechnen der realen Porösität **PO** der sekundären Dichtheitsbarriere gemäß der folgenden Formel:

$$PO = -\frac{dP}{dt} \, x \, \frac{V}{P_m} \, x \, \sqrt{\frac{P_m \, xM}{2x\Delta PxRxT_m}}$$

   in der die Variationsgeschwindigkeit des Drucks **P** im Innern des Freiraums (60) der sekundären Isolierschicht (6), **V** das Volumen des Freiraums (60) der sekundären Isolierschicht (6), **M** die molare Masse des inerten Gases und **R** die Konstante der perfekten Gase ist.

2. Verfahren gemäß Anspruch 1, **dadurch gekennzeichnet, dass**, um die Veränderung der Geschwindigkeit $\frac{dT}{dt}$ im Freiraum der sekundären Isolierschicht und die Veränderung des Drucks $(\frac{dP}{dt})_{PRE}$ aufgrund punktueller oder kontinuierlicher Kontrollstichproben in diesem selben Raum zu berücksichtigen, das gemessene $\frac{dP}{dt}$ korrigiert wird, das also wird: $\left(\dfrac{dP}{dt}\right)_C = \left(\dfrac{dT}{dt} \, x \, \dfrac{P_m}{T_m}\right) + \left(\dfrac{dP}{dt}\right)_{PRE}$ und die reale Porösität PO der sekundären Dichtheitsbarriere (5) gemäß der folgenden Formel berechnet wird:

$$PO = -\left(\frac{dP}{dt}\right)_C x \frac{V}{P_m} x \sqrt{\frac{P_m x M}{2 x \Delta P x R x T_m}}$$

3. Verfahren gemäß Anspruch 1 oder 2, **dadurch gekennzeichnet, dass** das Öffnen und das Schließen der Einlass- (401, 601) und Auslassventile (402, 602) gesteuert wird, um den Druck im Innern des Freiraums (40) der primären Isolierschicht (4) auf einen Wert in der Nähe des normalen atmosphärischen Drucks und den Druck im Innern des Freiraums (60) der sekundären Isolierschicht (6) auf einen Wert zu halten, der um einen positiven Druckunterschied ∆**P** größer als der ist, der im Innern des Freiraums (40) der primären Isolierschicht (4) herrscht.

4. Verfahren gemäß Anspruch 1, 2 oder 3, **dadurch gekennzeichnet, dass** das Öffnen und das Schließen des primären Einlass- (401) und Auslassventils (402) und des sekundären Einlass- (601) und Auslassventils (602) des inerten Gases gesteuert wird, damit der Druckunterschied ∆**P** ungefähr zwischen 0,5 und 4 mbar (zwischen 50 und 400 Pa) ist.

5. Verfahren gemäß Anspruch 4, **dadurch gekennzeichnet, dass** das Öffnen und das Schließen des primären Einlass (401) - und Auslassventils (402) und des sekundären Einlass (601) - und Auslassventils (602) des inerten Gases gesteuert wird, damit der Druckunterschied ∆**P** ungefähr zwischen 2 und 4 mbar (zwischen 200 und 400 Pa) ist.

6. Verfahren gemäß Anspruch 5, **dadurch gekennzeichnet, dass** das sekundäre Gaseinlassventil (602) geöffnet wird, wenn der Druckunterschied ∆**P** kleiner als 200 Pa ist und dass es wieder geschlossen wird, wenn der Druck-unterschied ∆**P** nahe bei 300 Pa ist, und dass das sekundäre Auslassventil des inerten Gases geöffnet wird, wenn der Druckunterschied ∆**P** größer als 400 Pa ist und wieder geschlossen wird, wenn der Druckunterschied ∆**P** nahe bei 300 Pa ist.

7. Verfahren gemäß einem der vorhergehenden Ansprüche, **dadurch gekennzeichnet, dass** das inerte Gas Stickstoff ist.

## FIG. 1

EP 1 939 606 B1

**FIG. 2**

**FIG. 3**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2509839